# EUROPEAN PATENT APPLICATION

(11) **EP 4 741 888 A1**
(43) Date of publication of application: **13.05.2026**
(21) Application number: 24835360.9
(22) Date of filing: 03.07.2024
(51) Int. Cl.: G02B 5/18

(54) **GRATING STRUCTURE, LIGHT GUIDE DEVICE, OPTICAL MODULE AND HEAD-MOUNTED DISPLAY DEVICE**

(30) Priority: 06.07.2023 CN 202310828956
(71) Applicant: Goertek Optical Technology (Shanghai) Co., Ltd., Shanghai 201109 (CN)
(72) Inventor: CHENG, Xin, Shanghai 201109 (CN)
(74) Representative: Rau, Schneck & Hübner Patentanwälte Rechtsanwälte PartGmbB
(86) International application number: PCT/CN2024/103263
(87) International publication number: WO 2025/007880

(57) **Abstract**

Some embodiments of the present disclosure provide a grating structure, a light guide device, an optical module and a head-mounted display device; the grating structure includes: a substrate and a grating layer, the grating layer being provided on one side of the substrate, and including a plurality of grating units arranged sequentially at intervals; by regulating a refractive index of a gap between two adjacent grating units, the grating layer is capable of having a target diffraction efficiency; wherein a difference between the refractive index of the gap and that of the grating units is a target value A, and 0 < A ≤ 2. The grating structure design scheme provided by the embodiments of the present disclosure can regulate the diffraction efficiency without changing the shape of the surface relief grating. (FIG. 1)

## Description

### CROSS-REFERENCE TO RELATED APPLICATIONS

The present application claims priority to Chinese patent application No. 202310828956.X filed with the CNIPA on July 6, 2023 and entitled "GRATING STRUCTURE, LIGHT GUIDE DEVICE, OPTICAL MODULE AND HEAD-MOUNTED DISPLAY DEVICE", which is hereby incorporated by reference in its entirety.

### TECHNICAL FIELD

The embodiments of the present application relate to the field of optical technology, and particularly to a grating structure, a light guide device, an optical module and a head-mounted display device.

### BACKGROUND

Among various diffractive optical devices, diffraction optical waveguide is currently one of the mainstream technical solutions for implementing augmented reality. It utilizes the diffraction effect of micro/nano-structured gratings to couple light in and out, and transmits light by means of total internal reflection within transparent substrate. In existing technologies, diffraction efficiency is regulated basically by changing the shape of the gratings in the grating-based diffraction optical schemes, which results in insufficient flexibility in controlling the diffraction efficiency of the gratings.

### SUMMARY

An objective of the present disclosure is to provide new technical solutions for a grating structure, a light guide device, an optical module and a head-mounted display device.

In a first aspect, an embodiment of the present disclosure provides a grating structure. The grating structure comprises:
a substrate; and,
a grating layer provided on one side of the substrate, and comprising a plurality of grating units arranged sequentially at intervals;
by regulating a refractive index of a gap between two adjacent grating units, the grating layer is capable of having a target diffraction efficiency; wherein a difference between the refractive index of the gap and that of the grating units is a target value A, and 0 < A ≤ 2.

Optionally, a type of the grating structure comprises a surface relief grating.

Optionally, the grating layer comprises a rectangular grating layer, a blazed grating layer, or a slanted grating layer.

Optionally, at least one material is filled in the gap by means of coating and/or depositing to regulate the refractive index of the gap.

Optionally, a first material is filled in the gap, and has a first refractive index to regulate the refractive index of the gap, so that a difference between the regulated refractive index of the gap and the refractive index of the grating units forms the target value A.

Optionally, the first material is filled to be flush with the grating units, or overflows from the gap and covers the grating units, so that the gap has the first refractive index.

Optionally, a first material and a second material are filled in the gap, the first material has a first refractive index and the second material has a second refractive index for regulating the refractive index of the gap to be a mean value of the first refractive index and the second refractive index, and a difference between the regulated refractive indexes of the gap and the refractive index of the grating units satisfies the target value A.

Optionally, the first material is filled in the gap, and the second material covers the first material; wherein the second material is flush with the grating units or overflows from the gap and covers the grating units.

Optionally, the first material is deposited along an outer contour of the grating layer, and the second material fills the gap and covers the first material; wherein the second material is flush with the grating units or overflows from the gap and covers the grating units.

Optionally, a metal layer covers along an outer contour of the grating layer, and comprises at least one of aluminum and silver.

Optionally, an antioxidant layer covers a side of the metal layer facing away from the grating layer;
wherein the antioxidant layer comprises silicon dioxide or titanium dioxide.

In a second aspect, an embodiment of the present disclosure provides a light guide device. The light guide device comprises a base and at least a first grating area and a second grating area provided on the base;
the first grating area comprises the grating structure according to any one of the first aspect and/or the second grating area comprises the grating structure according to a part of the first aspect.

In a third aspect, an embodiment of the present disclosure provides an optical module. The optical module comprises:
the light guide device according to the second aspect; and
an optical engine configured for projecting light onto the light guide device.

In a fourth aspect, an embodiment of the present disclosure provides a head-mounted display device. The head-mounted display device comprises:
a front frame assembly comprising at least one lens mounting portion;
a wearing assembly detachably connected to the front frame assembly; and,
the optical module according to the third aspect; wherein the light guide device is provided in the lens mounting portion, and the optical engine is provided on the front frame assembly and located on a side close to the wearing assembly.

The beneficial effects of the present disclosure are as follows:
According to embodiments of the present disclosure, new design schemes for a grating structure are provided. By controlling the refractive index of the gap between adjacent grating units, it is possible to regulate the diffraction efficiency of the grating so as to meet different diffraction requirements of diffraction elements. Wherein, the difference between the refractive index of the gap and that of the grating units is designed to be within the range of 0 to 2 (excluding 0), which can increase the regulation range of the diffraction efficiency. Compared to the existing method of regulating diffraction efficiency by changing the shape of the grating, the scheme proposed in the present disclosure can regulate the diffraction efficiency without changing the shape of the grating. This regulation method is more flexible and easier to implement.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings, which are incorporated in the description and constitute a part of the description, illustrate embodiments of the present description and, together with the description thereof, serve to explain the principles of the present disclosure.
FIG. 1 is a first schematic diagram of a grating structure having an air gap;
FIG. 2 is a -1st order diffraction efficiency curve of the grating structure shown in FIG. 1;
FIG. 3 is a first structural schematic diagram of a grating structure provided by an embodiment of the present disclosure;
FIG. 4 is a -1st order diffraction efficiency curve of the grating structure shown in FIG. 3;
FIG. 5 is a second schematic diagram of a grating structure having an air gap;
FIG. 6 is a -1st order diffraction efficiency curve of the grating structure shown in FIG. 5;
FIG. 7 is a second structural schematic diagram of a grating structure provided by an embodiment of the present disclosure;
FIG. 8 is a -1st order diffraction efficiency curve of the grating structure shown in FIG. 7;
FIG. 9 is a third structural schematic diagram of a grating structure provided by an embodiment of the present disclosure;
FIG. 10 is a fourth structural schematic diagram of a grating structure provided by an embodiment of the present disclosure;
FIG. 11 is a fifth structural schematic diagram of a grating structure provided by an embodiment of the present disclosure;
FIG. 12 is a sixth structural schematic diagram of a grating structure provided by an embodiment of the present disclosure;
FIG. 13 is a diffraction efficiency curve when the grating structure shown in FIG. 12 is applied to in-coupling light;
FIG. 14 is a seventh structural schematic diagram of a grating structure provided by an embodiment of the present disclosure;
FIG. 15 is an out-coupling efficiency curve when the grating structure shown in FIG. 5 is applied to out-coupling light;
FIG. 16 is an out-coupling efficiency curve when the grating structure shown in FIG. 6 is applied to out-coupling light;
FIG. 17 is a structural schematic diagram of a light guide device provided by an embodiment of the present disclosure.

Description of reference signs:
100. substrate; 101. grating unit; 102. air gap; 103. first material; 104. second material; 105. metal layer; 106. antioxidant layer;
1. first grating area; 2. second grating area; 3. base.

### DETAILED DESCRIPTION

Various exemplary embodiments of the present disclosure will now be described in detail with reference to the accompanying drawings. It is to be noted that unless otherwise specified, the scope of present disclosure is not limited to relative arrangements, numerical expressions and values of components and steps as illustrated in the embodiments.

Description to at least one exemplary embodiment is for illustrative purpose only, and in no way implies any restriction on the present disclosure or application or use thereof.

Techniques, methods and devices known to those skilled in the prior art may not be discussed in detail; however, such techniques, methods and devices shall be regarded as part of the description where appropriate.

In all the examples illustrated and discussed herein, any specific value shall be interpreted as illustrative rather than restrictive. Different values may be available for alternative examples of the exemplary embodiments.

It is to be noted that similar reference numbers and alphabetical letters represent similar items in the accompanying drawings. In the case that a certain item is identified in a drawing, further reference thereof may be omitted in the subsequent drawings.

Below, in conjunction with the accompanying drawings, the grating structure, light guide device, optical module, and head-mounted display device provided by the embodiments of the present disclosure will be described in detail.

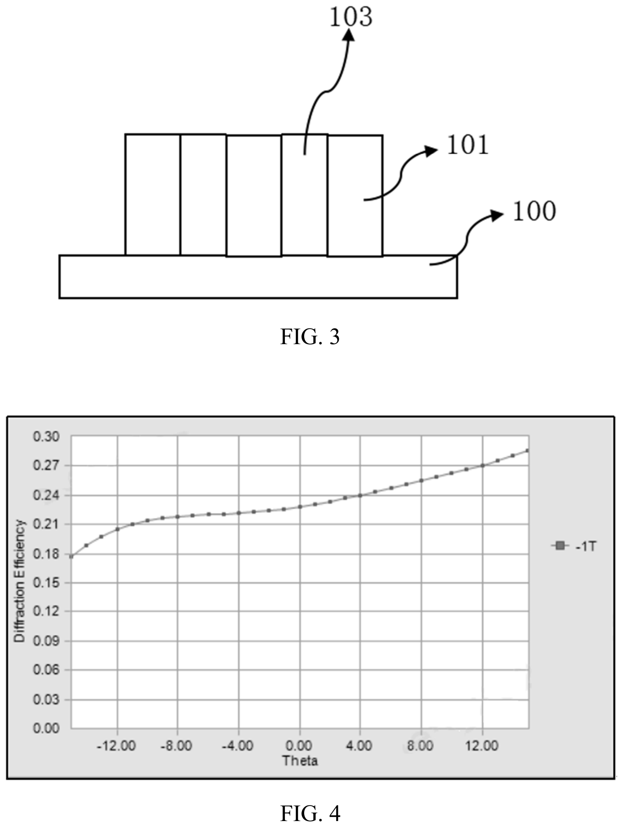

According to one embodiment of the present disclosure, a grating structure is provided. Referring to FIGS. 3, 7, and 9-11, the grating structure comprises a substrate 100 and a grating layer, and the grating layer is provided on one side of the substrate 100 and comprises a plurality of grating units 101 arranged sequentially at intervals; by regulating the refractive index of the gap between two adjacent grating units 101, the grating layer is capable of having a target diffraction efficiency; wherein, the difference between the refractive index of the gap and that of the grating units 101 is a target value A, and 0 < A ≤ 2.

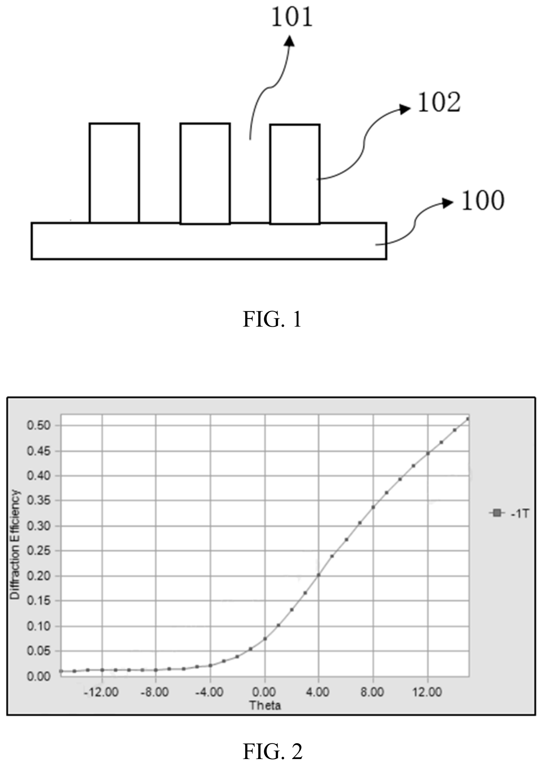

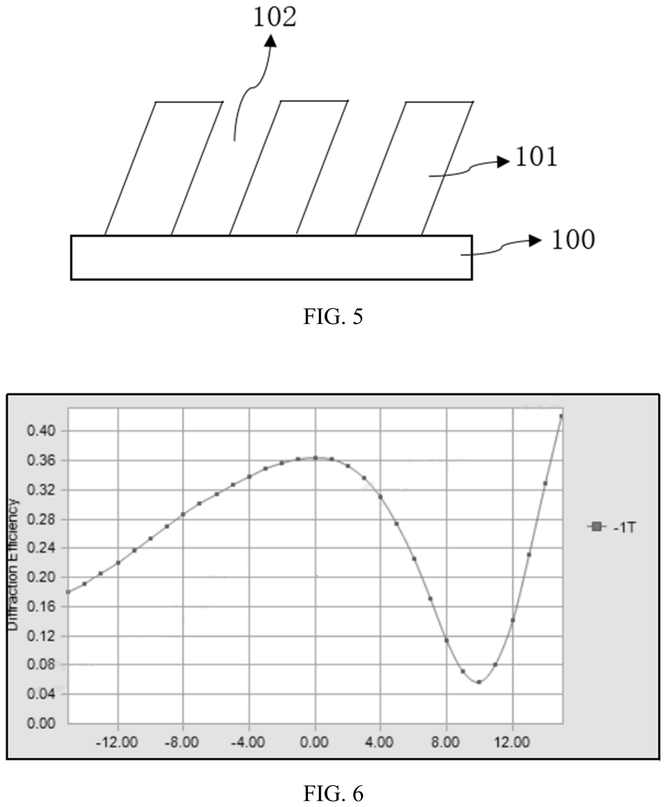

Referring to the grating structure shown in FIGS. 1 and 5, there is an air gap 102 between two adjacent grating units 101. That is, the gap between two adjacent grating units 101 is filled with air. In this case, the refractive index of this gap is the refractive index of air.

According to the above embodiment of the present disclosure, it is proposed to regulate the refractive index of the gap between two adjacent grating units 101, so that the difference between the refractive index of the gap and that of the grating units 101 can satisfy the aforementioned target value A, with 0 < A ≤ 2. This can effectively improve the diffraction efficiency of the grating structure at certain angles.

In other words, according to the grating structure provided by the above embodiment, it is possible to regulate the diffraction efficiency of the grating structure by changing the refractive index of the gap between adjacent grating units 101, thereby improving the flexibility in designing the diffraction efficiency of the grating structure.

According to the grating structure provided by the above embodiment, it can be applied to diffractive optical devices, and serve either as the in-coupling element of the diffractive optical device or as the out-coupling element.

For example, when the grating structure is applied in the in-coupling area to serve as the in-coupling element, by regulating the refractive index of the gap to maintain a certain difference between it and the refractive index of the grating units 101, namely the target value A mentioned in the above embodiment, it is possible to improve the in-coupling diffraction efficiency.

It should be noted that diffraction optical waveguide schemes generally suffer from the disadvantage of low diffraction efficiency. The main reason is that the low efficiency of their in-coupling part affects the overall efficiency of the diffractive device. The grating structure provided by the embodiments of the present disclosure, when applied to the in-coupling part, can improve the in-coupling diffraction efficiency by regulating the refractive index of the gap between adjacent grating units 101.

For example, when the grating structure is applied in the out-coupling area to serve as the out-coupling element, it is required to have a suitable and relatively low out-coupling diffraction efficiency, such as <5%, and this can be achieved by reducing the difference between the refractive index of the grating units 101 and that of the gap to suppress the diffraction efficiency.

According to embodiments of the present disclosure, new design schemes for a grating structure is provided, which can be applied to display-related diffractive optical schemes. By controlling the refractive index of the gap between adjacent grating units 101, it is possible to regulate the diffraction efficiency of the grating structure so as to meet different diffraction requirements of diffraction elements. Wherein, the difference between the refractive index of the gap and that of the grating units 101 is designed to be within the range of 0 to 2 (excluding 0), which can increase the regulation range of the diffraction efficiency. Compared to the existing method of regulating diffraction efficiency by changing the shape of the grating, the scheme proposed in the present disclosure can regulate the diffraction efficiency without changing the shape of the grating. This regulation method is more flexible and easier to implement.

Referring to FIG. 1, in the grating structure shown in FIG. 1, the gap between adjacent grating units 101 is an air gap 102, and the grating layer therein is a rectangular grating layer, meaning the grating units 101 are rectangular gratings. FIG. 2 shows the -1st order diffraction efficiency curve of the grating structure shown in FIG. 1. It can be seen that when the incident angle of light is between -15° and 4°, the -1st order diffraction efficiency of the grating structure is very low, almost 0.

Referring to FIG. 3, the difference between the grating structure shown in FIG. 3 and the grating structure shown in FIG. 1 lies in the regulation of the refractive index of the gap between adjacent grating units 101, and controlling the refractive index of the gap and the refractive index of the grating units 101 to satisfy the aforementioned range of target value A. FIG. 4 shows the -1st order diffraction efficiency curve of the grating structure shown in FIG. 3. It can be seen that for incident angle of light within the range of -15° to 4°, the -1st order diffraction efficiency of the grating structure is significantly improved, and the -1st order diffraction efficiency within the range of 4° to 15° is also improved. In other words, by changing the refractive index of the gap between adjacent grating units 101, the diffraction efficiency of the grating structure at certain angles can be effectively improved.

It should be noted that for rectangular gratings, existing schemes regulate diffraction efficiency by changing the height and width of the grating units 101. However, due to the limited controllable variables of the rectangular gratings, the overall diffraction efficiency is low and difficult to improve. The scheme of the present disclosure can overcome this defect.

Referring to FIG. 5, in the grating structure shown in FIG. 5, the gap between adjacent grating units 101 is an air gap 102, wherein the grating layer is a slanted grating layer. Referring to FIG. 6, which is a -1st order diffraction efficiency curve of the grating structure shown in FIG. 5, it can be seen that, for example, when the incident angle of light ranges from 6° to 10°, the -1st order diffraction efficiency of the grating structure is relatively low.

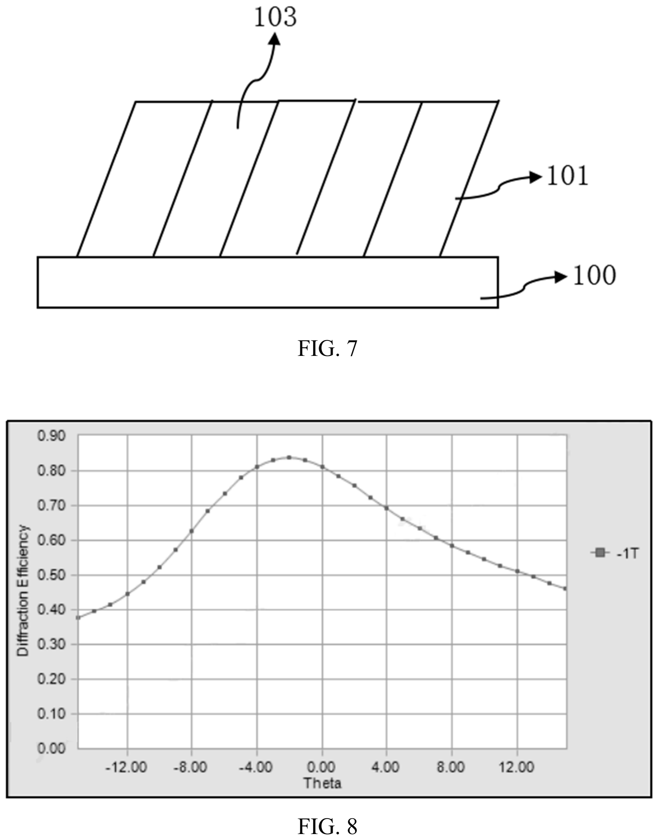

Referring to FIG. 7, the difference between the grating structure shown in FIG. 7 and the grating structure shown in FIG. 5 lies in the regulation of the refractive index of the gap between adjacent grating units 101, and controlling the refractive index of the gap and the refractive index of the grating units 101 to satisfy the aforementioned range of target value A. FIG. 8 shows the -1st order diffraction efficiency curve of the grating structure shown in FIG. 7. It can be seen that for the incident angle of light within the range of 6° to 10°, the -1st order diffraction efficiency of the grating structure is very significantly improved, and the -1st order diffraction efficiency in other ranges is also improved. In other words, for slanted gratings, higher regulation of diffraction efficiency can be achieved by changing the refractive index of the gap between adjacent grating units 101.

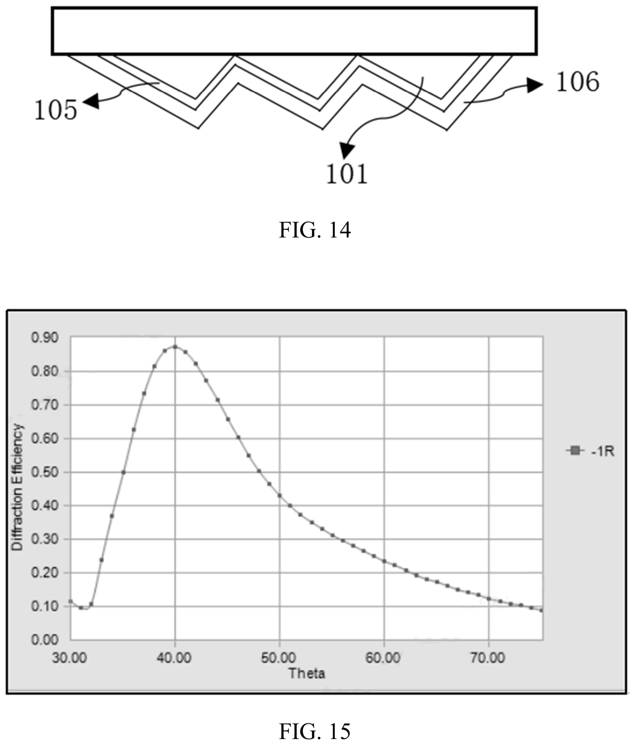

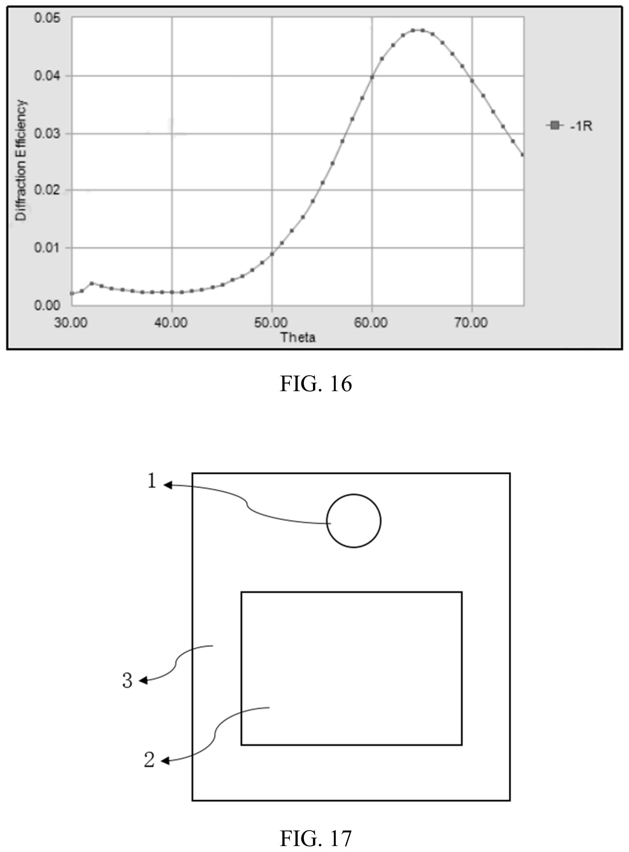

For the out-coupling part of a diffractive optical device, it requires a suitable and relatively low out-coupling diffraction efficiency, for example, an out-coupling diffraction efficiency of <5%. Referring to FIG. 15, when the gap between the grating units 101 is an air gap, the diffraction out-coupling efficiency is relatively high within the range of 30° to 50°. Referring to FIG. 16, by regulating the air gap between the grating units 101, the diffraction out-coupling efficiency is reduced within the range of 30° to 50°.

In some examples of the present disclosure, the type of the grating structure comprises a surface relief grating.

Currently, diffraction optical waveguide schemes based on surface relief gratings basically regulate diffraction efficiency by changing the shape of the surface relief gratings.

According to the above example, the scheme provided by the embodiments of the present disclosure is particularly suitable for regulating the diffraction efficiency of surface relief gratings, as it can regulate the diffraction efficiency without changing the shape of the surface relief grating.

Optionally, referring to FIGS. 3, 7, as well as FIGS. 12 and 14, the grating layer comprises a rectangular grating layer, a blazed grating layer, or a slanted grating layer.

The grating structure can be applied to the in-coupling part of a diffractive optical device, which functions to couple external light in. The granting structure is generally implemented as rectangular gratings, blazed gratings, or slanted gratings, which are low in cost and simple in production processes.

In some examples of the present disclosure, at least one material is filled in the gap by means of coating and/or depositing to regulate the refractive index of the gap.

According to the above example, when the material is filled into the gap, it is possible to change/regulate the refractive index of that gap. For example, the gap can have a refractive index identical to or approximate to that of the filled material. In other words, the refractive index of the gap is related to the refractive index of the filled material.

Wherein, the filled material can be adhesives with different refractive indices.

It should be noted that one material can be filled in the gap, or two or more materials can be filled therein, which is not limited in the present disclosure. In practical applications, the design can be carried out according to the requirements of the regulation of the refractive index. When two or more materials are filled in the gap, the refractive index of the gap is the mean value of the refractive indices of the multiple filled materials.

Wherein, the coating process includes spin coating or spray coating.

Wherein, the depositing process includes methods such as atomic layer deposition (ALD), physical vapor deposition (PVD), chemical vapor deposition (CVD).

Wherein, the filled material is, for example, titanium dioxide (TiO2).

In some examples of the present disclosure, referring to FIGS. 3, 7, and 9, a first material 103 is filled in the gap, and the first material 103 has a first refractive index, which can be used to regulate the refractive index of the gap, so that the difference between the regulated refractive index of the gap and the refractive index of the grating units 101 forms the target value A.

According to the above example, by filling one material, namely the aforementioned first material 103, in the gap between adjacent grating units 101, the gap may have the refractive index of the first material 103. Thus, regulation of the diffraction efficiency of the grating structure can be achieved by filling a material in the gap. This regulation method is relatively simple and easy to implement.

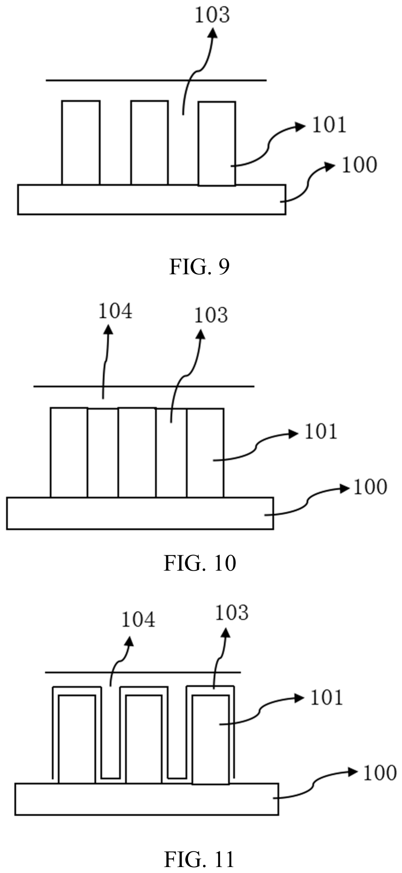

Optionally, referring to FIGS. 3 and 7, the first material 103 is filled to be flush with the grating units 101, or overflows from the gap and covers the grating units 101 as shown in FIG. 9, so that the gap has the first refractive index.

Referring to FIGS. 3 and 7, for example, spray coating can be used to fill the first material 103 into the gap with control to ensure that the first material 103 completely fills the gap and forms a flush state with the grating unit 101, which is a preferred scheme. In this case, no air exists within the gap, and the refractive index of the gap is just the refractive index of the first material 103, i.e., the refractive index of the gap is the first refractive index. It should be noted that the process of filling the first material 103 to be flush with the grating units 101 is relatively complex.

In actual production, the first material 103 can be made to overflow from the gap so as to ensure that the first material 103 completely fills the entire gap, in which case no air exists within the gap. This does not affect the effect of regulating the diffraction efficiency of the grating structure and can also reduce production difficulty.

Specifically, referring to FIG. 9, the first material 103 overflows from the gap and covers the grating units. The gap is completely filled with the first material 103, and the refractive index of the gap is the refractive index of the first material.

In some examples of the present disclosure, referring to FIGS. 10 and 11, a first material 103 and a second material 104 are filled in the gap. The first material 103 has a first refractive index, and the second material 104 has a second refractive index, for regulating the refractive index of the gap to be the mean value of the first refractive index and the second refractive index, and the difference between the regulated refractive index of the gap and the refractive index of the grating units 101 satisfies the target value A.

The gap is not limited to being filled with only one material. By filling two or more materials with different refractive indices and taking the mean value of the refractive indices of the different materials, the gap can obtain additional refractive indices, which facilitates a more flexible adjustment of the diffraction efficiency.

Optionally, referring to FIG. 10, the first material 103 is filled in the gap and the second material 104 covers the first material 103; wherein, the second material 104 is flush with the grating units 101 or overflows from the gap and covers the grating units 101.

According to the above example, the first material 103 can first be filled in the gap by spray coating, and then the second material 104 can cover the first material 103 by means of spin coating or deposition, with the second material 104 and the first material 103 together completely filling the gap. In this case, the refractive index of the gap is the mean value of the first refractive index and the second refractive index.

Optionally, referring to FIG. 11, the first material 103 is deposited along the outer contour of the grating layer, and the second material 104 fills the gap and covers the first material 103; wherein, the second material 104 is flush with the grating units 101 or overflows from the gap and covers the grating units 101.

According to the above example, the first material 103 can first be formed into a film layer along the outer contour of the grating layer by means of spin coating or deposition, and then, the second material 104 is spray-coated in the gap. This also allows the regulation of the refractive index of the gap by means of the first material 103 and the second material 104, so that the difference between the refractive index of the grating units 101 and that of the gap satisfies the target value A.

It should be noted that when two or more materials are filled in the gap, the filling sequence and method of the materials can be designed as needed, which is not limited in the present disclosure. The gap may also not be completely filled with material, allowing air to be introduced, which can also adjust the refractive index of the gap.

For example, according to the aforementioned example, when the first material 103 is filled in the gap and the gap is not completely filled with the first material 103, air remains in the gap. This is equivalent to filling the gap with a mixture of two materials having different refractive indices. The refractive index of the gap is then the mean value of the first refractive index of the first material 103 and that of air.

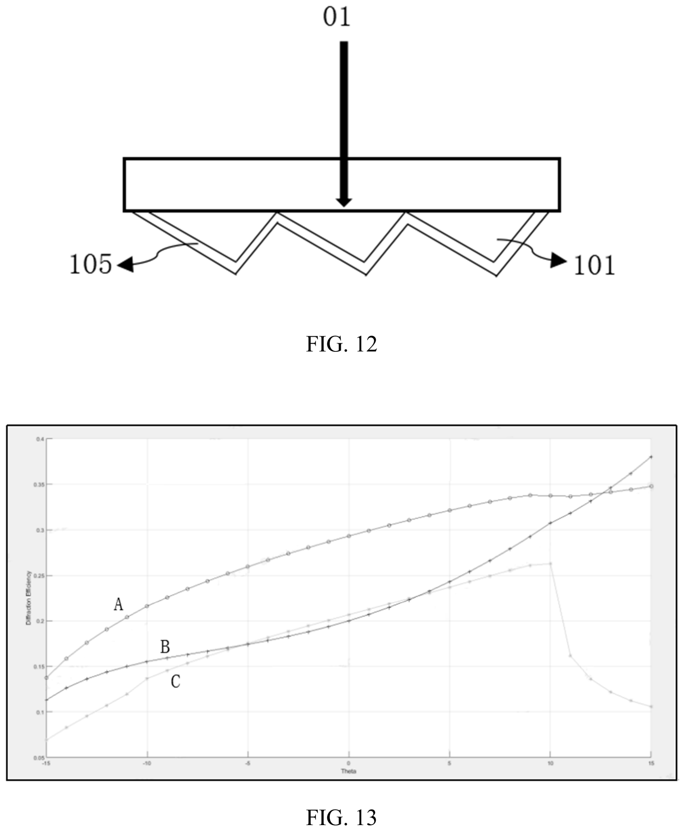

In some examples of the present disclosure, referring to FIG. 12, a metal layer 105 covers along the outer contour of the grating layer. The metal layer 105 comprises at least one of aluminum and silver.

Wherein, the grating layer can be any one of a rectangular grating layer, a slanted grating layer, and a blazed grating layer.

For example, light incident at angles of -15° to 15° is directed respectively onto a blazed grating layer without a deposited metal layer 105, with deposited aluminum and with deposited silver, and the diffraction efficiencies of the corresponding in-coupling part are shown in FIG. 13. In FIG. 13, curve A is the diffraction efficiency curve corresponding to the deposited aluminum, curve B is the diffraction efficiency curve corresponding to the deposited silver, and curve C is the diffraction efficiency curve corresponding to no deposited metal. It can be observed that after depositing aluminum and silver, the overall diffraction efficiency is significantly improved.

In some examples of the present disclosure, referring to FIG. 14, an antioxidant layer 106 covers the side of the metal layer 105 facing away from the grating layer; wherein, the antioxidant layer comprises silicon dioxide or titanium dioxide.

Since metals are prone to oxidation reactions with oxygen in the air, an antioxidant layer 106 is designed to be deposited on the surface of the metal layer 105. The antioxidant layer 106 is, for example, silicon dioxide, titanium dioxide, or other stable substances in air.

It should be noted that for the in-coupling part of a diffractive optical device, methods such as ALD, PVD, or CVD can be used to deposit aluminum, silver, or other metals, or combinations thereof, onto the surface of the grating structure. Simultaneously, substances such as silicon dioxide or titanium dioxide can be deposited on the surface of the metal layer 105 for protection.

The grating structure with a deposited metal layer is typically applied to the in-coupling part of a diffractive optical device to improve diffraction efficiency.

According to one embodiment of the present disclosure, a light guide device is provided. Referring to FIG. 17, the light guide device comprises a base 3 and at least a first grating area 1 and a second grating area 2 provided on the base 3. The first grating area 1 is used for coupling light into the base 3 and causing the light to propagate to the second grating area 2 by total internal reflection. The second grating area 2 is used for coupling out the light. The first grating area 1 comprises the grating structure as described above, and/or the second grating area 2 comprises the grating structure as partially described above.

Wherein, the first grating area 1 is the in-coupling part. The second grating area 2 is the out-coupling part.

Wherein, the grating structure provided with the metal layer 105 and the antioxidant layer 106, i.e., the grating structure shown in FIGS. 12 and 14, is typically used only in the in-coupling part to improve optical efficiency. The grating structure shown in FIGS. 12 and 14 is typically not used in the out-coupling part.

According to the light guide device provided by an embodiment of the present disclosure, it can be, for example, a diffraction optical waveguide, suitable for application in a wearable device. The wearable device includes a head-mounted display (HMD) device, such as an AR head-mounted display device.

When the light guide device is a diffraction optical waveguide, the base 3 is a waveguide substrate. Of course, the aforementioned light guide device can also be other forms of diffractive optical elements.

According to another embodiment of the present disclosure, an optical module is provided.

The optical module comprises the light guide device as described above and an optical engine. The optical engine is configured for projecting light onto the light guide device.

Wherein, the light emitted by the optical engine can cover the entire first grating area 1.

Wherein, the light emitted by the optical engine can be monochromatic light or polychromatic light.

The optical module provided by an embodiment of the present disclosure can be applied in, for example, the head-mounted display device, specifically in AR glasses or AR helmets.

According to yet another embodiment of the present disclosure, a head-mounted display device is provided. The head-mounted display device comprises a front frame assembly and a wearing assembly. The front frame assembly comprises at least one lens mounting portion. The wearing assembly is detachably connected to the front frame assembly. The head-mounted display device further comprises the optical module as described above. The light guide device is provided in the lens mounting portion, and the optical engine is provided on the front frame assembly and located on a side close to the wearing assembly.

Wherein, the front frame assembly is, for example, an eyeglass frame or the main body of a helmet. The wearing assembly is, for example, temple arms or straps.

Specific implementations of the light guide device and the optical module of the embodiments of the present disclosure can refer to the various embodiments of the above-described light guide device, and therefore they at least have all the beneficial effects brought by the technical solutions of the above embodiments, which will not be repeated herein.

The above embodiments focus on the differences between the various embodiments, and the different optimization features between the various embodiments, as long as they do not contradict each other, may be combined to form a better embodiment, which will not be repeated herein taking into account the brevity of the text.

Although some specific embodiments of the present disclosure have been described in detail through examples, those skilled in the art should understand that the above examples are for illustration only and are not intended to limit the scope of the present disclosure. Those skilled in the art should understand that the above embodiments can be modified without departing from the scope and spirit of the present disclosure. The scope of the present disclosure is defined by the accompanying claims.

## Claims

1. A grating structure, **characterized by** comprising:
a substrate (100); and,
a grating layer provided on one side of the substrate (100), and comprising a plurality of grating units (101) arranged sequentially at intervals;
by regulating a refractive index of a gap between two adjacent grating units (101), the grating layer is capable of having a target diffraction efficiency; wherein a difference between the refractive index of the gap and that of the grating units (101) is a target value A, and 0 < A ≤ 2.

2. The grating structure according to claim 1, **characterized in that** a type of the grating structure comprises a surface relief grating.

3. The grating structure according to claim 1 or 2, **characterized in that** the grating layer comprises a rectangular grating layer, a blazed grating layer, or a slanted grating layer.

4. The grating structure according to claim 3, **characterized in that** at least one material is filled in the gap by means of coating and/or depositing to regulate the refractive index of the gap.

5. The grating structure according to claim 4, **characterized in that** a first material (103) is filled in the gap, and has a first refractive index to regulate the refractive index of the gap, so that a difference between the regulated refractive index of the gap and the refractive index of the grating units (101) forms the target value A.

6. The grating structure according to claim 5, **characterized in that** the first material (103) is filled to be flush with the grating units (101), or overflows from the gap and covers the grating units (101), so that the gap has the first refractive index.

7. The grating structure according to claim 4, **characterized in that** a first material (103) and a second material (104) are filled in the gap, the first material (103) has a first refractive index and the second material (104) has a second refractive index for regulating the refractive index of the gap to be a mean value of the first refractive index and the second refractive index, and a difference between the regulated refractive indexes of the gap and the refractive index of the grating units (101) satisfies the target value A.

8. The grating structure according to claim 7, **characterized in that** the first material (103) is filled in the gap, and the second material (104) covers the first material (103); wherein the second material (104) is flush with the grating units (101) or overflows from the gap and covers the grating units (101).

9. The grating structure according to claim 7, **characterized in that** the first material (103) is deposited along an outer contour of the grating layer, and the second material (104) fills the gap and covers the first material (103); wherein the second material (104) is flush with the grating units (101) or overflows from the gap and covers the grating units (101).

10. The grating structure according to claim 3, **characterized in that** a metal layer (105) covers along an outer contour of the grating layer, and comprises at least one of aluminum and silver.

11. The grating structure according to claim 10, **characterized in that** an antioxidant layer (106) covers a side of the metal layer (105) facing away from the grating layer;
wherein the antioxidant layer comprises silicon dioxide or titanium dioxide.

12. A light guide device, **characterized by** comprising a base (3) and at least a first grating area (1) and a second grating area (2) provided on the base (3);
the first grating area (1) is used for coupling light into the base (3) and causing the light to propagate to the second grating area (2) by total internal reflection, and the second grating area (2) is used for coupling out the light;
the first grating area (1) comprises the grating structure according to any one of claims 1 to 11 and/or the second grating area (2) comprises the grating structure according to any one of claims 1 to 9.

13. An optical module, **characterized by** comprising:
the light guide device according to claim 12; and
an optical engine configured for projecting light onto the light guide device.

14. A head-mounted display device, **characterized by** comprising:
a front frame assembly comprising at least one lens mounting portion;
a wearing assembly detachably connected to the front frame assembly; and,
the optical module according to claim 13; wherein the light guide device is provided in the lens mounting portion, and the optical engine is provided on the front frame assembly and located on a side close to the wearing assembly.
